(19) Europäisches Patentamt / European Patent Office / Office européen des brevets

(11) **EP 3 089 471 A1**

(12) **EUROPEAN PATENT APPLICATION**
published in accordance with Art. 153(4) EPC

(43) Date of publication:
**02.11.2016 Bulletin 2016/44**

(21) Application number: **14875371.8**

(22) Date of filing: **11.12.2014**

(51) Int Cl.:
**H04N 21/8547** (2011.01)

(86) International application number:
**PCT/CN2014/093599**

(87) International publication number:
**WO 2015/096622 (02.07.2015 Gazette 2015/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.12.2013 CN 201310750815**

(71) Applicants:
• **LE Holdings (Beijing) Co., Ltd.**
  **Beijing 100025 (CN)**
• **Le Shi Zhi Xin Electronic Technology (Tianjin) Limited**
  **Beijing 100025 (CN)**

(72) Inventors:
• **PING, Kai**
  **Beijing 100025 (CN)**
• **TANG, Jiangjie**
  **Beijing 100025 (CN)**

(74) Representative: **Gosnall, Toby**
**Barker Brettell LLP**
**100 Hagley Road**
**Edgbaston**
**Birmingham**
**B16 8QQ (GB)**

(54) **VIDEO SMOOTHING METHOD AND DEVICE**

(57) Provided are a video smoothing method and device, which can reduce the shake phenomena of a video in the process of playing the video. The method comprises: receiving a first indication message; according to the first indication message, starting a frame synchronization VSync event monitoring thread; acquiring the Nth frame of video frames to be played and storing same in a pre-established first queue, the Nth frame of the video frames to be played carrying corresponding timestamps, and when the first frame of the video frames to be played is acquired, synchronizing the clock time of the VSync event monitoring thread with a first timestamp; determining whether the VSync event monitoring thread is awakened; if it is determined that the VSync event monitoring thread is awakened, according to the timestamps corresponding to the video frames to be played in the first queue, checking whether a video frame to be played conforming to a pre-set condition is stored in the first queue; and if the video frame to be played conforming to the pre-set condition is stored in the first queue, rendering out the video frame to be played. The present application is applicable to the technical field of computers.

| |
|---|
| an apparatus for smoothing videos receives a first indication message which indicates that a video player starts playing — 101 |
| the apparatus for smoothing videos initiates a Vsync event detecting thread in response to the first indication message — 102 |
| the apparatus for smoothing videos obtains an N-th frame of videos to be played, and stores it in a first queue created in advance, where the N-th frame of videos to be played carries a corresponding timestamp, and synchronizes a clock time of the Vsync event detecting thread with a first timestamp when the first frame of videos to be played is obtained — 103 |
| the apparatus for smoothing videos determines whether the Vsync event detecting thread is to be resumed — 104 |
| if it is determined that the Vsync event detecting thread is to be resumed, then the apparatus for smoothing videos detects the frame of video to be played which satisfies the predetermined condition is stored in the first queue, according to the timestamps corresponding to the frames of videos to be played in the first queue — 105 |
| if a frame of videos to be played which satisfies the predetermined condition is stored in the first queue, then the apparatus for smoothing videos is to render the frame of videos to be played which satisfies the predetermined condition — 106 |

Fig.1

Description

FIELD OF TECHNOLOGY

The present disclosure relates to a field of computer technology, and particularly to a method and an apparatus for smoothing videos.

BACKGROUND

Generally videos need to be played by firstly obtaining frames of videos to be played, from a video player, then surface-rendering the frames of videos to be played, and finally outputting the frames of videos.

However the play precision of the video player in the existing Android system is low, that is, there is generally an error of at least ±10ms between a timing when a frame of videos to be played is obtained from the video player and a timestamp of the frame of videos to be played. For example, the frame of videos to be played with the timestamp of 30ms is obtained at the timing of 20ms.

The timings when frames of videos to be played are obtained from the video player may vary due to the above error, and the obtained frames of videos to be played are surface-rendered in the Android system at a fixed rate. Accordingly when the frames of videos to be played are surface-rendered with reference to the timings when the frames of videos to be played are obtained, then some frames of videos may be discarded, and some frames of videos may be played for a prolonged period of time, thereby resulting in serious jitter of the videos.

SUMMARY

Embodiments of the present disclosure are to provide a method and an apparatus for smoothing videos with an object of alleviating jitter of videos to be played.

In order to attain the object above, there are the following technical solutions provided by the embodiments of the invention.

In a first aspect, there is provided a method for smoothing videos, the method including:

receiving a first indication message which indicates that a video player starts playing;

initiating a frame synchronization (Vertical Synchronization (Vsync)) event detecting thread in response to the first indication message, wherein the Vsync event detecting thread is configured, upon being resumed, to detect whether a frame of video to be played which satisfies a predetermined condition is stored;

obtaining an N-th frame of videos to be played, and storing it in a first queue created in advance, wherein the N-th frame of videos to be played carries a corresponding timestamp, and synchronizing a clock time of the Vsync event detecting thread with a first timestamp when the first frame of videos to be played is obtained, where N≥1 and N is an integer, and the first timestamp is a timestamp corresponding to the first frame of videos to be played;

determining whether the Vsync event detecting thread is to be resumed;

detecting, if it is determined that the Vsync event detecting thread is to be resumed, whether the frame of videos to be played which satisfies the predetermined condition is stored in the first queue, according to the timestamps corresponding to the frames of videos to be played in the first queue; and

rendering, if the frame of videos to be played which satisfies the predetermined condition is stored in the first queue, the frame of videos to be played which satisfies the predetermined condition.

In a first possible implementation of the first aspect, in connection with the first aspect, the determining whether the Vsync event detecting thread is to be resumed may include:

determining whether a Vsync signal generated periodically within surface render periods is received; and

determining, if the Vsync signal is received, that the Vsync event detecting thread is to be resumed.

In a second possible implementation of the first aspect, in connection with the first aspect or the first possible implementation of the first aspect,

a condition that the timestamps carried in the frames of videos to be played satisfy a first relationship, wherein the first relationship is as follow:

$$t1-a \leq PTS < t1+(T-a),$$

where t1 represents a current clock time of the Vsync event detecting thread, a represents a predetermined clock offset, PTS represents a timestamp carried by a frame of videos to be played, and T represents the surface render period.

In a third possible implementation of the first aspect, in connection with the second possible implementation of the first aspect, the predetermined clock offset in the first relationship satisfies a second condition, wherein the second condition is as follow:

$$0 \leq a < T.$$

In a fourth possible implementation of the first aspect, in connection with the third possible implementation of the first aspect, the predetermined clock offset may include:

$$a=1/2T,$$

wherein the first relationship is as follow:

$$t1-1/2T \leq PTS < t1+1/2T.$$

In a second aspect, there is provided an apparatus for smoothing videos, the apparatus including:

a receiving module configured to receive a first indication message which indicates that a video player starts playing;

an initiating module configured to initiate a Vertical Synchronization (Vsync) event detecting thread in response to the first indication message received by the receiving module, wherein the event detecting thread is configured, upon being resumed, to detect whether a frame of videos to be played which satisfies a predetermined condition is stored;

an obtaining module configured to obtain an N-th frame of video to be played;

a storing module configured to store the N-th frame of videos to be played which is obtained by the obtaining module in a first queue created in advance, wherein the N-th frame of videos to be played carries a corresponding timestamp;

a clock synchronizing module configured to synchronize a clock time of the Vsync event detecting thread with a first timestamp when the obtaining module obtains the first frame of videos to be played, where N≥1 and N is an integer, and the first timestamp is a timestamp corresponding to the first frame of videos to be played;

a determining module configured to determine whether the Vsync event detecting thread is to be resumed;

a detecting module configured, if the determining module determines that the Vsync event detecting thread is to be resumed, to detect whether the frame of videos to be played which satisfies the predetermined condition is stored in the first queue, according to the timestamps corresponding to the frames of videos to be played which are stored by the storing module in the first queue; and

a rendering module configured, if the detecting module detects the frame of videos to be played which satisfies the predetermined condition is stored by the storing module in the first queue, to render the frame of videos to be played which satisfies the predetermined condition.

In a first possible implementation of the second aspect, in connection with the second aspect, the determining module may be configured:

to determine whether a Vsync signal generated periodically within surface render periods is received; and

to determine, if the Vsync signal is received, that the Vsync event detecting thread is to be resumed.

In a second possible implementation of the second aspect, in connection with the second aspect or the first possible implementation of the second aspect, the predetermined condition may include:

a condition that the timestamps carried in the frames of videos to be played satisfy a first relationship, wherein the first relationship is as follow:

$$t1-a \leq PTS < t1+(T-a),$$

where t1 represents a current clock time of the Vsync event detecting thread, a represents a predetermined clock offset, PTS represents a timestamp carried by a frame of videos to be played, and T represents the surface render period.

In a third possible implementation of the second aspect, in connection with the second possible implementation of the second aspect, the predetermined clock offset in the first relationship satisfies a second condition, wherein the second condition is as follow:

$$0 \leq a < T.$$

In a fourth possible implementation of the second aspect, in connection with the third possible implementation of the second aspect, the predetermined clock offset may include:

$$a = 1/2T,$$

wherein the first relationship is as follow:

$$t1-1/2T \leq PTS < t1+1/2T.$$

The embodiments of the present disclosure provides a method and an apparatus for smoothing videos. The apparatus for smoothing videos receives a first indication message, and initiates a Vsync event detecting thread in response to the first indication message, where the Vsync event detecting thread is configured, upon being resumed, to detect whether a frame of videos to be played which satisfies a predetermined condition is stored; the apparatus obtains an N-th frame of videos to be played, and stores it in a first queue created in advance, where the N-th frame of videos to be played carries a corresponding timestamp, and the apparatus synchronizes a clock time of the Vsync event detecting thread with a first timestamp when the first frame of videos to be played is obtained, where $N \geq 1$ and N is a positive, and the first timestamp is a timestamp corresponding to the first frame of videos to be played; and the apparatus determines whether the Vsync event detecting thread is to be resumed, and if it is determined that the Vsync event detecting thread is to be resumed, then the apparatus detects whether the frame of videos to be played which satisfies the predetermined condition is stored in the first queue, according to the timestamps corresponding to the frames of videos to be played, in the first queue, and if the frame of videos to be played which satisfies the predetermined condition is stored in the first queue, then the apparatus renders the frame of videos to be played which satisfies the predetermined condition. With the solution above according to the embodiments of the present disclosure, if the player starts playing, then the Vsync event detecting thread is initiated, if the Vsync event detecting thread is resumed (awoken), then whether a frame of videos to be played which satisfies a predetermined condition is stored in the first queue is detected (checked) according to the timestamps corresponding to the frames of videos to be played in the first queue, and if the frame of videos to be played which satisfies the predetermined condition is detected, then the frame of videos to be played is rendered; and since periodicity of the timestamps corresponding to the frames of videos to be played is uniform, the frame of videos to be played which satisfies the predetermined condition can be selected with reference to the timestamps of the frames of videos to be played, and be rendered so that the frames of videos to be played can be rendered at a uniform rate, thereby alleviating jitter of the videos to be played.

**BRIEF DESCRIPTION OF THE DRAWINGS**

Fig.1 is a schematic flow chart of a method for smoothing videos according to a first embodiment of the present disclosure;

Fig.2 is a schematic flow chart of a method for smoothing videos according to a second embodiment of the present disclosure; and

Fig.3 is a schematic structural diagram of an apparatus for smoothing videos according to a third embodiment of the present disclosure.

**DESCRIPTION OF THE EMBODIMENTS**

A method and an apparatus for smoothing videos according to embodiments of the present disclosure will be described below in details with reference to the drawings.

First Embodiment

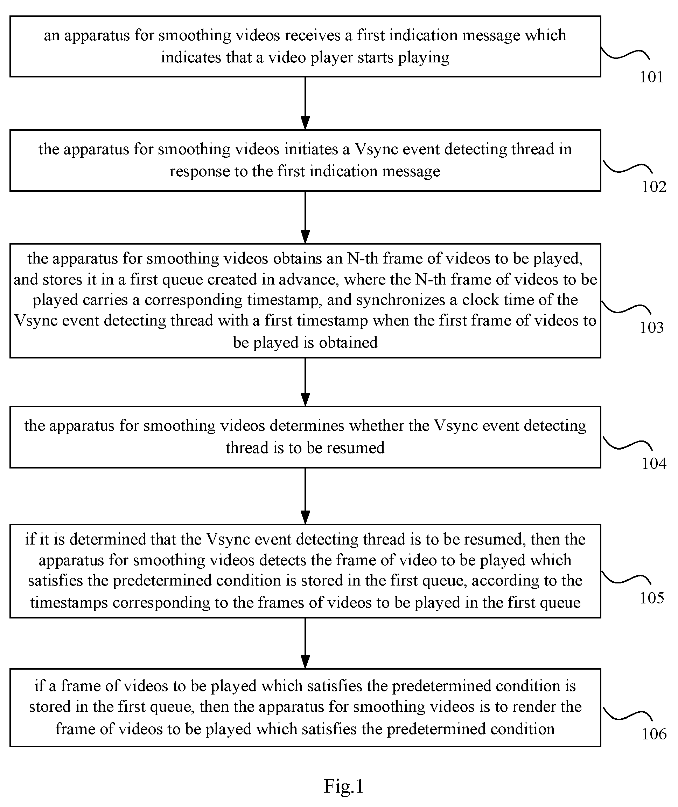

As illustrated in Fig.1 in particular, a method for smoothing videos according to an embodiment of the present disclosure includes:

Step101, an apparatus for smoothing videos receives a first indication message which indicates that a video player starts playing.

Particularly if a user plays the video, then the apparatus for smoothing videos will firstly receive the first indication message generated as a result of the user triggering the video player, where the first indication message indicates that the video player starts playing.
It shall be noted that the apparatus for smoothing videos in the embodiment of the present disclosure may particularly be a separate apparatus installed in an Android video playing device, or may be an apparatus integrated in the Android video playing device, and the embodiments of the present disclosure will not be limited thereto, although the apparatus for smoothing videos receives the first indication message which indicates that the video player starts playing.
Step102, the apparatus for smoothing videos initiates a frame synchronization (Vertical Synchronization (Vsync)) event detecting thread in response to the first indication message.
Here the Vsync event detecting thread is configured, upon being resumed (awoken), to detect whether a frame of videos to be played which satisfies a predetermined condition is stored.
Particularly the apparatus for smoothing videos initiates the Vsync event detecting thread in response to the first indication message upon reception of the first indication message.
It shall be noted that the Vsync event detecting thread is configured to detect a Vsync signal generated by the system periodically within surface render periods, and if there is no Vsync signal arriving, then the Vsync event detecting thread will be suspended; or if there is a Vsync signal arriving, then the Vsync event detecting thread will be resumed once and further detect whether appropriate data of a frame of videos to be played are stored, and if there are such data, then the data of the frame of videos will be surface-rendered.
It shall be noted that Vsync in the embodiment of the present disclosure may be synchronization of a video frame or synchronization of another frame to be rendered, so the resumed Vsync event detecting thread will detect not only synchronization information of the video frames, but also synchronization information of the other frames to be rendered. And the embodiment of the present disclosure will not be limited thereto, but the videos will be smoothed as described in the embodiment of the present disclosure, so only the synchronization information of the video frames will be described in the embodiment of the present disclosure, while the Vsync event detecting thread will not handle the other frames to be rendered in the embodiment of the present disclosure.
Step103, the apparatus for smoothing videos obtains an N-th frame of videos to be played, and stores it in a first queue created in advance, where the N-th frame of videos to be played carries a corresponding timestamp, and synchronizes a clock time of the Vsync event detecting thread with a first timestamp when the first frame of videos to be played is obtained.

Here N≥1 and N is an integer, and the first timestamp is a timestamp corresponding to the first frame of videos to be played.

Particularly while the videos are being played, the apparatus for smoothing videos obtains the N-th frame of videos to be played, and stores the N-th frame of videos to be played in the first queue created in advance, where the N-th frame of videos to be played carries the corresponding timestamp.

Here the clock time of the Vsync event detecting thread will be synchronized with the timestamp corresponding to the first frame of videos to be played when the first frame of videos to be played is obtained, that is, if the timestamp of the first frame of videos to be played is 25ms, then the clock time of the Vsync event detecting threshold is synchronized to 25ms when the first frame of videos to be played is obtained, thereby ensuring timestamps of all the frames of videos to be played which are started with the first frame of videos to be played to lie in a detection period of time of the Vsync event detecting thread.

Step104, the apparatus for smoothing videos determines whether the Vsync event detecting thread is to be resumed.

Particularly the apparatus for smoothing videos may determine whether the Vsync event detecting thread is to be resumed, as follows:

It is determined whether a Vsync signal generated periodically within surface render periods is received; and

If the Vsync signal is received, then it is determined that the Vsync event detecting thread is to be resumed.

By way of an example, the surface render frequency is typically 60Hz, that is, the render period is 16ms, so a Vsync signal will be generated by the system at an interval of 16ms, and be sent to the apparatus for smoothing videos, and the apparatus for smoothing videos can determine that the Vsync event detecting thread is to be resumed, and further perform the following respective steps, upon reception of the Vsync signal; and of course, if there is no Vsync signal arriving, then the Vsync event detecting thread will be suspended, so the following respective steps will temporality not be performed.

Step105, if it is determined that the Vsync event detecting thread is to be resumed, then the apparatus for smoothing videos detects the frame of video to be played which satisfies the predetermined condition is stored in the first queue, according to the timestamps corresponding to the frames of videos to be played in the first queue.

Particularly if it is determined that the Vsync event detecting thread is to be resumed, then the apparatus for smoothing videos detects the frame of videos to be played which satisfies the predetermined condition is stored in the first queue, according to the timestamps corresponding to the frames of videos to be played in the first queue, where the predetermined condition may particularly include:

The timestamps carried in the frames of videos to be played satisfy a first relationship, and the first relationship may be as follow:

$$t1-a \leq PTS < t1+(T-a),$$

Where t1 represents a current clock time of the Vsync event detecting thread, a represents a predetermined clock offset, PTS represents a timestamp carried by a frame of videos to be played in the first queue, and T represents the surface render period, i.e., a Vsync period.

It shall be noted that the predetermined clock offset in the embodiment of the present disclosure is a predetermined reference variable to reflect a whole offset of a timestamp of a frame of videos to be played which are to be surface-rendered, relative to a surface render time. The whole offset may be a reference variable less than T, or may be a reference variable no less than T, and the embodiment of the present disclosure will not be limited thereto.

Preferably the predetermined clock offset in the first relationship satisfies a second condition, which may be $0 \leq a < T$.

It shall be noted that in order to ensure that the frame of videos to be played is rendered at a time closer to the timestamp thereof, the predetermined clock offset in the first relationship is defined as less than the surface render period, so that jitter of the videos can be further alleviated.

Preferably the value of a is 1/2T, so the first relationship is $t1-1/2T < PTS < t1+1/2T$, and at this time, the frame of videos to be played can be ensured to be rendered at the closest time to the timestamp thereof, so that jitter of the videos can be still further alleviated.

It shall be noted that since the periods of the timestamps of the frames of videos to be played are typically more than the surface render period, whether a frame of video to be played which satisfies the predetermined condition is stored in the first queue is detected with reference to the timestamps of the frames of videos to be played, then such an instance will not occur that there are two frames of videos to be played which both satisfy the predetermined condition. And if there is an error of at least $\pm 10$ms between the acquisition time and the timestamps of the frames of videos, then more than one frame of videos will be stored in a display buffer for subsequent surface rendering, but only one of the frames can be rendered, and the other frames of videos will be discarded, thereby alleviating jitter of the videos.

Step106, if a frame of videos to be played which satisfies the predetermined condition is stored in the first queue, then the apparatus for smoothing videos is to render the frame of videos to be played which satisfies the predetermined condition.

Particularly if a frame of videos to be played which satisfies the predetermined condition is stored in the first queue, then the apparatus for smoothing videos will render the frame of videos to be played which satisfies the predetermined condition.

By way of an example, if the predetermined condition is that a timestamp carried in a frame of videos in the first queue satisfies the relationship t1-1/2T<PTS<t1+1/2T, the surface render period is 16m, and the period of the timestamp of the frame of videos is 25ms, then several frames of videos to be played from obtaining of the first frame of videos to be played until synchronization of the clock time of the Vsync event detecting thread with the first timestamp will be rendered as listed below in Table 1.

Table 1

| Clock time (ms) of Vsync event detecting thread | Timestamp (ms) of frame of videos to be played |
|---|---|
| 32 | 25 |
| 48 | 50 |
| 64 | --- |
| 80 | 75 |
| 96 | 100 |
| 112 | --- |
| 128 | 125 |
| 144 | 150 |
| 160 | --- |
| 176 | 175 |
| 192 | --- |
| 208 | 200 |
| 224 | 225 |
| 240 | --- |
| 256 | 250 |

It shall be noted that if no frame of videos to be played which satisfies the predetermined condition is stored in the first queue, then at this time the apparatus for smoothing videos will not render any frame of videos, as depicted by a sign "---" in Table 1.

With the solution in the prior art, the following instances will occur:

A frame of videos to be played, with a timestamp of 25ms is acquired at the time of 15ms and rendered at the time of 16ms; and

A frame of video to be played, with a timestamp of 50ms is acquired at the time of 58ms and rendered at the time of 64ms;

Here there is such a large interval of time between the time when the frame of videos to be played, with the timestamp of 25ms is rendered, and the time when the frame of videos to be played, with the timestamp of 50ms is rendered, such that the frame of videos to be played, with the timestamp of 25ms may be played for a prolonged period of time.

If there is such an instance that:

A frame of video to be played, with a timestamp of 25ms is acquired at the time of 35ms, a frame of video to be played, with a timestamp of 50ms is acquired at the time of 45ms, then there will be two frames of videos to be played at the surface render time of 48ms, and at this time one of the frames of videos will be discarded.

Thus in the solution according to the prior art, the rate at which the frames of videos are acquired is not uniform, thus resulting in serious jitter of the video; and in the embodiments of the present disclosure, since the period of the timestamps of the frames of videos to be played is uniform, as can be apparent from Table 1, the frames of videos to be played are surface-rendered at a uniform rate to thereby alleviate jitter of the videos being played.

It shall be noted that the process in the steps 104 to 106 is performed repeatedly, that is, the apparatus for smoothing videos determines all the time whether the Vsync event detecting thread is to be resumed, and if the Vsync event detecting thread is to be resumed, then the process will proceed to the step Step05, and further selectively to the step Step 106.

The embodiment of the present disclosure provides a method for smoothing videos, the method including: receiving a first indication message, and initiating a Vsync event detecting thread in response to the first indication message, where the Vsync event detecting thread is configured, upon being resumed, to detect whether a frame of videos to be played which satisfies a predetermined condition is stored; obtaining an N-th frame of videos to be played, and storing it in a first queue created in advance, where the N-th frame of videos to be played carries a corresponding timestamp, and synchronizing a clock time of the Vsync event detecting thread with a first timestamp when the first frame of videos to be played is obtained, where N≥1 and N is an integer, and the first timestamp is a timestamp corresponding to the first frame of videos to be played; and determining whether the Vsync event detecting thread is to be resumed, and if it is determined that the Vsync event detecting thread is to be resumed, then detecting the frame of videos to be played which satisfies the predetermined condition is stored in the first queue, according to the timestamps corresponding to the frames of videos to be played in the first queue, and if the frame of videos to be played which satisfies the predetermined condition is stored in the first queue, then rendering the frame of videos to be played which satisfies the predetermined condition. With the solution above according to the embodiment of the present disclosure, if the player starts playing, then the Vsync event detecting thread is initiated, if the Vsync event detecting thread is resumed, then a frame of videos to be played which satisfies a predetermined condition is stored in the first queue is detected according to the timestamps corresponding to the frames of videos to be played in the first queue, and if a frame of videos to be played which satisfies the predetermined condition is detected, then the frame of videos to be played is rendered; and since the periods of the timestamps corresponding to the frames of videos to be played are uniform, the frame of videos to be played which satisfies the predetermined condition can be selected with reference to the timestamp of the frame of videos to be played, and be rendered so that the frame of videos to be played can be rendered at a uniform rate, thereby alleviating jitter of the videos being played.

Second Embodiment

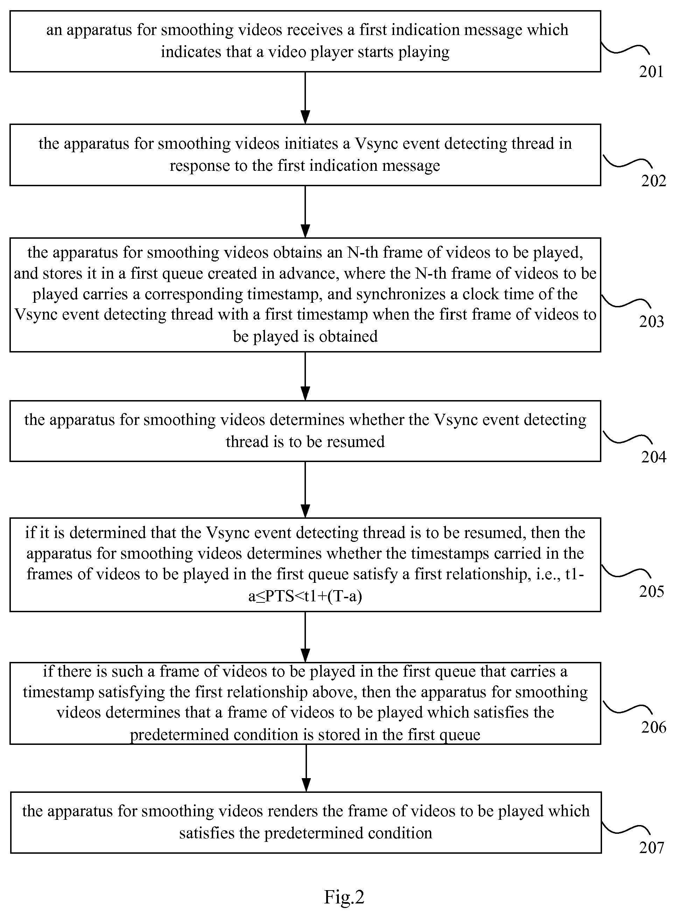

As illustrated in Fig.2 in particular, a method for smoothing videos according to an embodiment of the present disclosure includes:

Step201, an apparatus for smoothing videos receives a first indication message which indicates that a video player starts playing.

Particularly if a user plays the videos, then the apparatus for smoothing videos will firstly receive the first indication message generated as a result of the user triggering the video player, where the first indication message indicates that the video player starts playing.

It shall be noted that the apparatus for smoothing videos in the embodiment of the present disclosure may particularly be a separate apparatus installed in an Android video playing device, or may be an apparatus integrated in the Android video playing device, and the embodiments of the present disclosure will not be limited thereto, although the apparatus for smoothing videos receives the first indication message which indicates that the video player starts playing.

Step202, the apparatus for smoothing videos initiates a Vsync event detecting thread in response to the first indication message.

Here the Vsync event detecting thread is configured, upon being resumed, to detect a frame of videos to be played which satisfies a predetermined condition is stored.

Particularly the apparatus for smoothing videos starts the Vsync event detecting thread in response to the first indication message upon reception of the first indication message.

It shall be noted that the Vsync event detecting thread is configured to detect a Vsync signal generated by the system periodically within surface render periods, and if there is no Vsync signal arriving, then the Vsync event detecting thread will be suspended; or if there is a Vsync signal arriving, then the Vsync event detecting thread will be resumed once and further detect whether appropriate data of a frame of videos to be played are stored, and if there are such data, then the data of the frame of videos will be surface-rendered.

It shall be noted that Vsync in the embodiment of the present disclosure may be synchronization of a video frame or synchronization of another frame to be rendered, so the resumed Vsync event detecting thread will detect not only synchronization information of the video frames, but also synchronization information of the other frames to be rendered. And the embodiment of the present disclosure will not be limited thereto, but the videos will be smoothed as described in the embodiment of the present disclosure, so only the synchronization information of the video frames will be described in the embodiment of the present disclosure, while the Vsync event detecting thread will not handle the other frames to be rendered in the embodiment of the present disclosure.

Stpe203, the apparatus for smoothing videos obtains an N-th frame of videos to be played, and stores it in a first queue created in advance, where the N-th frame of videos to be played carries a corresponding timestamp, and synchronizes a clock time of the Vsync event detecting thread with a first timestamp when the first frame of videos to be played is obtained.

Here $N \geq 1$ and N is an integer, and the first timestamp is a timestamp corresponding to the first frame of videos to be played.

Particularly while the videos are being played, the apparatus for smoothing videos obtains the N-th frame of videos to be played, and stores the N-th frame of videos to be played in the first queue created in advance, where the N-th frame of videos to be played carries the corresponding timestamp.

Here the clock time of the Vsync event detecting thread will be synchronized with the timestamp corresponding to the first frame of videos to be played when the first frame of videos to be played is obtained, that is, if the timestamp of the first frame of videos to be played is 25ms, then the clock time of the Vsync event detecting threshold is synchronized to 25ms when the first frame of videos to be played is obtained, thereby ensuring timestamps of all the frames of videos to be played which are started with the first frame of videos to be played to lie in a detection period of time of the Vsync event detecting thread.

Step204, the apparatus for smoothing videos determines whether the Vsync event detecting thread is to be resumed.

Particularly the apparatus for smoothing videos may determine whether the Vsync event detecting thread is to be resumed, as follows:

It is determined whether a Vsync signal generated periodically within surface render periods is received; and

If the Vsync signal is received, then it is determined that the Vsync event detecting thread is to be resumed.

By way of an example, the surface render frequency is typically 60Hz, that is, the render period is 16ms, so a Vsync signal will be generated by the system at an interval of 16ms, and be sent to the apparatus for smoothing videos, and the apparatus for smoothing videos can determine that the Vsync event detecting thread is to be resumed, and further perform the following respective steps, upon reception of the Vsync signal; and of course, if there is no Vsync signal arriving, then the Vsync event detecting thread will be suspended, so the following respective steps will temporality not be performed.

Stpe205, if it is determined that the Vsync event detecting thread is to be resumed, then the apparatus for smoothing videos determines whether the timestamps carried in the frames of videos to be played in the first queue satisfy a first relationship, as follow:

$$t1-a \leq PTS < t1+(T-a),$$

Where t1 represents a current clock time of the Vsync event detecting thread, a represents a predetermined clock offset, PTS represents a timestamp carried by a frame of video to be played in the first queue, and T represents the surface render period, i.e., a Vsync period.

It shall be noted that the predetermined clock offset in the embodiment of the present disclosure is a predetermined reference variable to reflect a whole offset of a timestamp of a frame of videos to be played which are to be surface-rendered, relative to a surface render time. The whole offset may be a reference variable less than T, or may be a reference variable no less than T, and the embodiment of the present disclosure will not be limited thereto.

Preferably the predetermined clock offset in the first relationship satisfies a second condition, which may be $0 \leq a < T$.

It shall be noted that in order to ensure that the frame of videos to be played is rendered at a time closer to the timestamp thereof, the predetermined clock offset in the first relationship is defined as less than the surface render period, so that jitter of the videos can be further alleviated.

Preferably the value of a is 1/2T, so the first relationship is t1-1/2T<PTS<t1+1/2T, and at this time, the frame of videos to be played can be ensured to be rendered at the closest time to the timestamp thereof, so that jitter of the videos can be still further alleviated.

Step206, if there is such a frame of videos to be played in the first queue that carries a timestamp satisfying the first relationship above, then the apparatus for smoothing videos determines that a frame of videos to be played which satisfies the predetermined condition is stored in the first queue.

It shall be noted that since the periods of the timestamps of the frames of videos to be played are typically more than the surface render period, whether a frame of video to be played which satisfies the predetermined condition is stored in the first queue is detected with reference to the timestamps of the frames of videos to be played, then such an instance will not occur that there are two frames of videos to be played which both satisfy the predetermined condition, so such an instance in the prior art will not occur that with reference to the acquisition time of the frame of videos to be played. And if there is an error of at least ±10ms between the acquisition time and the timestamps of the frames of videos, then more than one frame of videos will be stored in a display buffer for subsequent surface rendering, but only one of the frames can be rendered, and the other frames of videos will be discarded, thereby alleviating jitter of the videos.

Step207, the apparatus for smoothing videos renders the frame of videos to be played which satisfies the predetermined condition.

Particularly if a frame of videos to be played which satisfies the predetermined condition is stored in the first queue, then the apparatus for smoothing videos will render the frame of videos to be played which satisfies the predetermined condition.

Reference can be made to the related description of Table 1 in the first embodiment for details about an example in which the apparatus for smoothing videos renders the frame of videos to be played which satisfies the predetermined condition, so a repeated description thereof will be omitted here in the embodiment of the present disclosure.

It shall be noted that if no frame of videos to be played which satisfies the predetermined condition is stored in the first queue, then at this time the apparatus for smoothing videos will not render any frame of videos, as depicted by a sign "---" in Table 1.

It shall be noted that the process in the steps 204 to 207 is performed repeatedly, that is, the apparatus for smoothing videos determines all the time whether the Vsync event detecting thread is to be resumed, and if the Vsync event detecting thread is to be resumed, then the process will proceed to the step205, and further selectively to the step206 and the step207.

The embodiment of the present disclosure provides a method for smoothing videos, the method including: receiving a first indication message, and initiating a Vsync event detecting thread in response to the first indication message, where the Vsync event detecting thread is configured, upon being resumed, to detect whether a frame of videos to be played, which satisfies a predetermined condition is stored; obtaining an N-th frame of videos to be played, and storing it in a first queue created in advance, where the N-th frame of videos to be played carries a corresponding timestamp, and synchronizing a clock time of the Vsync event detecting thread with a first timestamp when the first frame of videos to be played is obtained, where N≥1 and N is an integer, and the first timestamp is a timestamp corresponding to the first frame of videos to be played; and determining whether the Vsync event detecting thread is to be resumed, and if it is determined that the Vsync event detecting thread is to be resumed, then detecting the frame of videos to be played which satisfies the predetermined condition is stored in the first queue, according to the timestamps corresponding to the frames of videos to be played in the first queue, and if the frame of videos to be played which satisfies the predetermined condition is stored in the first queue, then rendering the frame of videos to be played which satisfies the predetermined condition. With the solution above according to the embodiment of the present disclosure, if the player starts playing, then the Vsync event detecting thread is initiated, if the Vsync event detecting thread is resumed, then a frame of videos to be played which satisfies a predetermined condition is stored in the first queue is detected according to the timestamps corresponding to the frames of videos to be played in the first queue, and if a frame of videos to be played which satisfies the predetermined condition is detected, then the frame of videos to be played is rendered; and since the periods of the timestamps corresponding to the frames of videos to be played are uniform, the frame of videos to be played which satisfies the predetermined condition can be selected with reference to the timestamp of the frame of videos to be played, and be rendered so that the frame of videos to be played can be rendered at a uniform rate, thereby alleviating jitter of the videos being played.

Third Embodiment

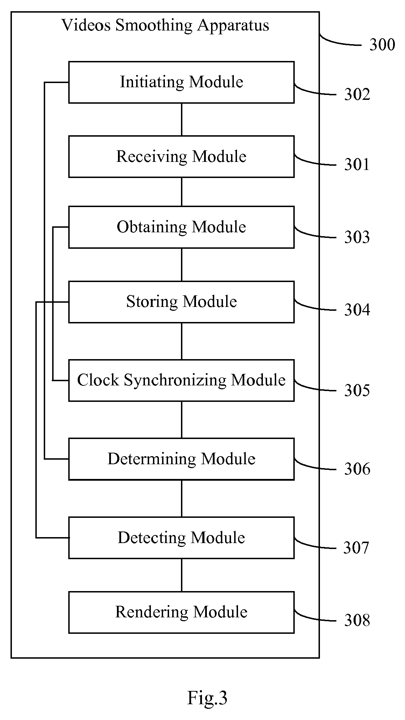

An embodiment of the present disclosure provides an apparatus 300 for smoothing videos, and as particularly illustrated in Fig.3, the apparatus 300 may include: a receiving module 301, an initiating module 302, an obtaining module 303, a storing module 304, a clock synchronizing module 305, a determining module 306, a detecting module 307, and a rendering module 308.

The receiving module 301 is configured to receive a first indication message which indicates that a video player starts playing.

The initiating module 302 is configured to initiate a Vsync event detecting thread in response to the first indication message received by the receiving module 301, where the event detecting thread is configured, upon being resumed, to detect whether a frame of videos to be played which satisfies a predetermined condition is stored.

The obtaining module 303 is configured to obtain an N-th frame of videos to be played.

The storing module 304 is configured to store the N-th frame of videos to be played which is obtained by the obtaining module 303 in a first queue created in advance, where the N-th frame of videos to be played carries a corresponding timestamp.

The clock synchronizing module 305 is configured to synchronize a clock time of the Vsync event detecting thread with a first timestamp when the obtaining module 303 obtains the first frame of videos to be played, where N≥1 and N is an integer, and the first timestamp is a timestamp corresponding to the first frame of videos to be played.

The determining module 306 is configured to determine whether the Vsync event detecting thread is to be resumed.

The detecting module 307 is configured, if the determining module 306 determines that the Vsync event detecting thread is to be resumed, to detect whether the frame of videos to be played which satisfies the predetermined condition is stored in the first queue, according to the timestamps corresponding to the frames of videos to be played which are stored by the storing module 304 in the first queue.

The rendering module 308 is configured, if the detecting module 307 detects the frame of videos to be played which satisfies the predetermined condition is stored by the storing module 304 in the first queue, to render the frame of videos to be played which satisfies the predetermined condition.

Furthermore the determining module 306 may be specifically configured:

To determine whether a Vsync signal generated periodically within surface render periods is received; and

If the Vsync signal is received, to determine that the Vsync event detecting thread is to be resumed.

In an embodiment of the present disclosure, the predetermined condition may specifically include:

A condition that the timestamps carried in the frames of videos to be played satisfy a first relationship, where the first relationship is as follow:

$$t1-a \leq PTS < t1+(T-a),$$

Where t1 represents a current clock time of the Vsync event detecting thread, a represents a predetermined clock offset, PTS represents a timestamp carried by a frame of videos to be played, and T represents the surface render period.

Preferably the predetermined clock offset in the first relationship satisfies a second condition that:

$$0 \leq a < T.$$

Specifically the predetermined clock offset may include:

$$a=1/2T,$$

where the first relationship is as follow:

$$t1-1/2T \leq PTS < t1+1/2T.$$

Reference can be made to the descriptions in the first embodiment and the second embodiment for details about the process of smoothing the video by the apparatus 300 for smoothing videos, so a repeated description thereof will be omitted here.

Fourth Embodiment

An embodiment of the present disclosure further provides a computer readable recording medium on which programs for performing any one of the methods according to the above embodiments of the present disclosure are recorded.

The computer readable recording medium includes any mechanism for storing or transporting computer (for example, a PC) readable information. For example the machine readable medium includes a Read Only Memory (ROM), a Random Access Memory (RAM), a magnetic disk storage medium, an optical storage medium, a flash memory medium, an electric, optical, acoustic or another form of propagated signal (e.g., a carrier wave, an infrared signal, a digital signal, etc.), etc.

The embodiment of the present disclosure provides an apparatus for smoothing videos, where if a receiving module receives a first indication message, then an initiating module initiates a Vsync event detecting thread, if a determining module determines that the Vsync event detecting thread is to be resumed, then a detecting module detects a frame of videos to be played which satisfies a predetermined condition is stored in a first queue according to timestamps of frames of videos to be played in the first queue, and if the detecting module detects the frame of videos to be played which satisfies the predetermined condition is stored, then the rendering module renders the frame of videos to be played; and since the period of the timestamps corresponding to the frames of videos to be played are uniform, the frame of videos to be played which satisfies the predetermined condition can be selected with reference to the timestamps of the frames of videos to be played, and be rendered so that the frames of videos to be played can be rendered at a uniform rate, thereby alleviating jitter of the videos being played.

Those skilled in the art can readily appreciate that the respective functional modules have been exemplified above for the sake of convenience and conciseness, but in a practical application, the functions above can be allocated to different functional modules as needed, that is, the internal structure of the apparatus can be divided into different functional modules for performing all or a part of the functions described above. Reference can be made to the corresponding processes in the embodiments of the method described above for particular operational processes of the apparatus described above, so a repeated description thereof will be omitted here.

In the several embodiments of the present disclosure, it shall be appreciated that the disclosed apparatus and method can be embodied otherwise. For example the embodiments of the apparatus described above are merely illustrative. Furthermore the illustrated or described coupling or direct coupling between the modules can be established via some interface, and indirect coupling or communication connection between the modules can be electrical, mechanical or in another form.

The modules described as separate components may or may not be physically separate, and the components illustrated as modules may be one or more physical modules, that is, they can be collocated or can be distributed at a number of places. A part or all of the modules can be selected as needed in reality for the purpose of the solution according to the embodiments of the present disclosure.

Moreover the respective functional modules in the respective embodiments of the present disclosure can be integrated in a processing module, or the respective modules can be physically embodied separately, or two or more of the modules can be integrated in a module. The integrated modules can be embodied in the form of hardware or can be embodied in the form of software functional modules.

If the integrated modules are embodied in the form of software functional modules, and sold or used as a separate product, then they can be stored in a readable storage medium. Based upon such understanding, the technical solutions of the present disclosure essentially or their parts contributing to the prior art or all or a part of the technical solutions can be embodied in the form of a software product stored in a storage medium, which includes several instructions to cause a device (e.g., a monolithic processor, a chip, etc.) or a processor to perform all or a part of the steps in the method according to the respective embodiments of the present disclosure. The storage medium includes a U-disk, a mobile hard disk, a Read-Only Memory (ROM), a Random Access Memory (RAM), a magnetic disk, an optic disk, and any other medium in which program codes can be stored.

The foregoing disclosure is illustrative of the particular embodiments of the present disclosure, but the present disclosure shall not be limited thereto; and any variations or equivalents which can readily occur to those skilled in the art without departing from the scope of the disclosure of the present disclosure shall fall into the scope of the present disclosure. Accordingly the scope of the present disclosure shall be as defined in the appended claims.

**Claims**

1. A method for smoothing videos, the method comprising:

receiving a first indication message which indicates that a video player starts playing;

initiating a frame synchronization (Vertical Synchronization (Vsync)) event detecting thread in response to the first indication message, wherein the Vsync event detecting thread is configured, upon being resumed, to detect whether a frame of videos to be played which satisfies a predetermined condition is stored;

obtaining an N-th frame of videos to be played, and storing it in a first queue created in advance, wherein the N-th frame of videos to be played carries a corresponding timestamp, and synchronizing a clock time of the Vsync event detecting thread with a first timestamp when the first frame of videos to be played is obtained, where $N \geq 1$ and N is an integer, and the first timestamp is a timestamp corresponding to the first frame of videos to be played;

determining whether the Vsync event detecting thread is to be resumed;

detecting, if it is determined that the Vsync event detecting thread is to be resumed, whether the frame of videos to be played which satisfies the predetermined condition is stored in the first queue, according to the timestamps corresponding to the frames of videos to be played in the first queue; and

rendering, if there is the frame of videos to be played which satisfies the predetermined condition is stored in the first queue, the frame of videos to be played which satisfies the predetermined condition.

2. The method according to claim 1, wherein the determining whether the Vsync event detecting thread is to be resumed comprises:

determining whether a Vsync signal generated periodically within surface render periods is received; and
determining, if the Vsync signal is received, that the Vsync event detecting thread is to be resumed.

3. The method according to claim 1 or 2, wherein the predetermined condition comprises:

a condition that the timestamps carried in the frames of videos to be played satisfy a first relationship, wherein the first relationship is as follow:

$$t1-a \leq PTS < t1+(T-a),$$

where t1 represents a current clock time of the Vsync event detecting thread, a represents a predetermined clock offset, PTS represents a timestamp carried by a frame of videos to be played, and T represents the surface render period.

4. The method according to claim 3, wherein the predetermined clock offset in the first relationship satisfies a second condition, wherein the second condition is as follow:

$$0 \leq a < T.$$

5. The method according to claim 4, wherein the predetermined clock offset comprises:

$$a=1/2T,$$

wherein the first relationship is as follow:

$$t1-1/2T \leq PTS < t1+1/2T.$$

6. An apparatus for smoothing videos, the apparatus comprising:

a receiving module configured to receive a first indication message which indicates that a video player starts playing;
an initiating module configured to initiate a frame synchronization (Vertical Synchronization (Vsync)) event detecting thread in response to the first indication message received by the receiving module, wherein the event detecting thread is configured, upon being resumed, to detect whether a frame of videos to be played which satisfies a predetermined condition is stored;

an obtaining module configured to obtain an N-th frame of videos to be played;

a storing module configured to store the N-th frame of videos to be played which is obtained by the obtaining module in a first queue created in advance, wherein the N-th frame of videos to be played carries a corresponding timestamp;

a clock synchronizing module configured to synchronize a clock time of the Vsync event detecting thread with a first timestamp when the obtaining module obtains the first frame of videos to be played, where $N \geq 1$ and N is an integer, and the first timestamp is a timestamp corresponding to the first frame of videos to be played;

a determining module configured to determine whether the Vsync event detecting thread is to be resumed;

a detecting module configured, if the determining module determines that the Vsync event detecting thread is to be resumed, to detect whether the frame of videos to be played which satisfies the predetermined condition is stored in the first queue, according to the timestamps corresponding to the frames of videos to be played which are stored by the storing module in the first queue; and

a rendering module configured, if the detecting module detects the frame of videos to be played which satisfies the predetermined condition is stored by the storing module in the first queue, to render the frame of videos to be played which satisfies the predetermined condition.

7. The apparatus according to claim 6, wherein the determining module is configured:

to determine whether a Vsync signal generated periodically within surface render periods is received; and
to determine, if the Vsync signal is received, that the Vsync event detecting thread is to be resumed.

8. The apparatus according to claim 6 or 7, wherein the predetermined condition comprises:

a condition that the timestamps carried in the frames of videos to be played satisfy a first relationship, wherein the first relationship is as follow:

$$t1\text{-}a \leq PTS < t1\text{+}(T\text{-}a),$$

where t1 represents a current clock time of the Vsync event detecting thread, a represents a predetermined clock offset, PTS represents a timestamp carried by a frame of videos to be played, and T represents the surface render period.

9. The apparatus according to claim 8, wherein the predetermined clock offset in the first relationship satisfies a second condition, wherein the second condition is as follow:

$$0 \leq a < T.$$

10. The apparatus according to claim 9, wherein the predetermined clock offset comprises:

$$a = 1/2T,$$

wherein the first relationship is as follow:

$$t1\text{-}1/2T \leq PTS < t1\text{+}1/2T.$$

11. A computer readable recording medium, on which programs for performing the method according to any one of claims 1 to 5 are recorded.

an apparatus for smoothing videos receives a first indication message which indicates that a video player starts playing

101

the apparatus for smoothing videos initiates a Vsync event detecting thread in response to the first indication message

102

the apparatus for smoothing videos obtains an N-th frame of videos to be played, and stores it in a first queue created in advance, where the N-th frame of videos to be played carries a corresponding timestamp, and synchronizes a clock time of the Vsync event detecting thread with a first timestamp when the first frame of videos to be played is obtained

103

the apparatus for smoothing videos determines whether the Vsync event detecting thread is to be resumed

104

if it is determined that the Vsync event detecting thread is to be resumed, then the apparatus for smoothing videos detects the frame of video to be played which satisfies the predetermined condition is stored in the first queue, according to the timestamps corresponding to the frames of videos to be played in the first queue

105

if a frame of videos to be played which satisfies the predetermined condition is stored in the first queue, then the apparatus for smoothing videos is to render the frame of videos to be played which satisfies the predetermined condition

106

Fig.1

an apparatus for smoothing videos receives a first indication message which indicates that a video player starts playing

201

the apparatus for smoothing videos initiates a Vsync event detecting thread in response to the first indication message

202

the apparatus for smoothing videos obtains an N-th frame of videos to be played, and stores it in a first queue created in advance, where the N-th frame of videos to be played carries a corresponding timestamp, and synchronizes a clock time of the Vsync event detecting thread with a first timestamp when the first frame of videos to be played is obtained

203

the apparatus for smoothing videos determines whether the Vsync event detecting thread is to be resumed

204

if it is determined that the Vsync event detecting thread is to be resumed, then the apparatus for smoothing videos determines whether the timestamps carried in the frames of videos to be played in the first queue satisfy a first relationship, i.e., t1-a≤PTS<t1+(T-a)

205

if there is such a frame of videos to be played in the first queue that carries a timestamp satisfying the first relationship above, then the apparatus for smoothing videos determines that a frame of videos to be played which satisfies the predetermined condition is stored in the first queue

206

the apparatus for smoothing videos renders the frame of videos to be played which satisfies the predetermined condition

207

Fig.2

Fig.3

## INTERNATIONAL SEARCH REPORT

| International application No. |
| --- |
| PCT/CN2014/093599 |

**A. CLASSIFICATION OF SUBJECT MATTER**

H04N 21/8547 (2011.01) i

According to International Patent Classification (IPC) or to both national classification and IPC

**B. FIELDS SEARCHED**

Minimum documentation searched (classification system followed by classification symbols)

H04N; H04W; H04B; H04Q

Documentation searched other than minimum documentation to the extent that such documents are included in the fields searched

Electronic data base consulted during the international search (name of data base and, where practicable, search terms used)

CNTXT, CNABS, CNKI, VEN: listen, stamp, synchronization, time, video, VSync, monitor, render, wake, surface, sync, up, vertical, play, smooth

**C. DOCUMENTS CONSIDERED TO BE RELEVANT**

| Category* | Citation of document, with indication, where appropriate, of the relevant passages | Relevant to claim No. |
| --- | --- | --- |
| PX | CN 103747332 A (LESHI ZHIXIN ELECTRONIC SCIENCE & TECHNOLOGY TIANJIN CO LTD) 23 April 2014 (23.04.2014) the whole document | 1-11 |
| A | CN 101842997 A (QUALCOMM INC.) 22 September 2010 (22.09.2010) the whole document | 1-11 |
| A | CN 101385366 A (PROXENSE LLC) 11 March 2009 (11.03.2009) the whole document | 1-11 |
| A | JP 2009147635 A (TOSHIBA CORP.) 2 July 2009 (02.07.2009) the whole document | 1-11 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 28 January 2015 | 17 March 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer DAI, Huiying Telephone No. (86-10) 62411475 |
| --- | --- |

Form PCT/ISA /210 (second sheet) (July 2009)

**INTERNATIONAL SEARCH REPORT**
Information on patent family members

International application No.

PCT/CN2014/093599

| Patent Documents referred in the Report | Publication Date | Patent Family | Publication Date |
|---|---|---|---|
| CN 103747332 A | 23 April 2014 | None | |
| CN 101842997 A | 22 September 2010 | JP 2011502452 A | 20 January 2011 |
| | | KR 20100072366 A | 30 June 2010 |
| | | JP 2011505716 A | 24 February 2011 |
| | | TW 200929961 A | 01 July 2009 |
| | | KR 20120043143 A | 03 May 2012 |
| | | JP 5290309 B2 | 18 September 2013 |
| | | KR 20100074323 A1 | 01 July 2010 |
| | | EP 2220907 A1 | 25 August 2010 |
| | | EP 2223435 A2 | 01 September 2010 |
| | | US 2009109945 A1 | 30 April 2009 |
| | | TW 200926696 A | 16 June 2009 |
| | | JP 5180314 B2 | 10 April 2013 |
| | | EP 2220908 A1 | 25 August 2010 |
| | | US 8576821 B2 | 05 November 2013 |
| | | CN 101843164 B | 03 December 2014 |
| | | TW 200929929 A | 01 July 2009 |
| | | CN 101843164 A | 22 September 2010 |
| | | KR 101125349 B1 | 27 March 2012 |
| | | WO 2009059226 A2 | 07 May 2009 |
| | | KR 20100069717 A | 24 June 2010 |
| | | WO 2009059226 A3 | 23 July 2009 |
| | | WO 2009059232 A1 | 07 May 2009 |
| | | JP 2011502451 A | 20 January 2011 |
| | | WO2009059229 A1 | 07 May 2009 |
| | | US 2009109955 A1 | 30 April 2009 |
| | | KR 101358900 B1 | 05 February 2014 |
| | | KR 101161077 B1 | 29 June 2012 |

Form PCT/ISA /210 (patent family annex) (July 2009)

## INTERNATIONAL SEARCH REPORT
Information on patent family members

| International application No. |
|---|
| PCT/CN2014/093599 |

| Patent Documents referred in the Report | Publication Date | Patent Family | Publication Date |
|---|---|---|---|
| | | JP 5280456 B2 | 04 September 2013 |
| | | US 2009109952 A1 | 30 April 2009 |
| | | CN 101843165 A | 22 September 2010 |
| CN 101385366 A | 11 March 2009 | US 2013315210 A1 | 28 November 2013 |
| | | US 2007174809 A1 | 26 July 2007 |
| | | US 2007159301 A1 | 12 July 2007 |
| | | US 2007159994 A1 | 12 July 2007 |
| | | US 2012300753 A1 | 29 November 2012 |
| | | US 8219129 B2 | 10 July 2012 |
| | | US 8340672 B2 | 25 December 2012 |
| | | US 8036152 B2 | 11 October 2011 |
| | | US 2007207750 A1 | 06 September 2007 |
| | | US 8457672 B2 | 04 June 2013 |
| JP 2009147635 A | 02 July 2009 | JP 1682185 B2 | 11 May 2011 |

Form PCT/ISA /210 (patent family annex) (July 2009)